# EUROPEAN PATENT APPLICATION

(11) **EP 4 682 408 A1**
(43) Date of publication of application: **21.01.2026**
(21) Application number: 24189307.2
(22) Date of filing: 18.07.2024
(51) Int. Cl.: F16J 9/14, F16J 9/20

(54) **PISTON RING**

(71) Applicant: WinGD Ltd., 8400 Winterthur (CH)
(72) Inventor: Weber, Markus, 8472 Seuzach (CH); Arcifa, Andrea, 8400 Winterthur (CH)
(74) Representative: Hepp Wenger Ryffel AG

(57) **Abstract**

A piston ring (100) for a piston of a reciprocating internal combustion engine comprises a ring section (1) and a lock section (2). The lock section (2) comprises a circumferential parting line (7) in a first axial parting line distance (PaT) from a top surface (T) of the piston ring (100) and a second axial parting line distance (PaB) from the bottom surface (B) of the piston ring (100).

Further the piston ring (100) comprises a cambered profile (10) with a circumferential pivot line (8) having a first axial pivot line distance (PiT) from the top surface (T) and a second axial pivot line distance (PiB) from the bottom surface.

According to the invention, the axial distance (9) between the circumferential parting line and the pivot line is smaller than 20%, preferably smaller than 10%, of the axial width of the piston ring.

Alternatively or in addition to a distinct pivot line, the cambered profile (10) can comprise a most protruding, axially extending, flat section (14). Then, the flat section (14) includes the circumferential parting line (7).

## Description

### Technical field

The invention relates to a piston ring for a piston of a reciprocating internal combustion engine according to the generic term of claim 1, a piston with such a piston ring, a reciprocating internal combustion engine with such a piston and a method for manufacturing a piston ring.

### Definitions and background art

The present invention preferably relates to an internal combustion engine like a large marine or ship engine or a stationary engine whose cylinders have an inner diameter of at least 200 mm. The engine preferably is a two-stroke engine or a two-stroke cross-head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally scavenged two-stroke engine.

The term internal combustion engine also refers to large engines which can be operated not only in diesel mode, which is characterized by the self-ignition of the fuel, but also in Otto mode, which is characterized by the forced ignition of the fuel, or in mixtures of the two. Furthermore, the term internal combustion engine includes in particular dual-fuel engines and large engines in which the self-ignition of the fuel is used for the forced ignition of another fuel. Forced ignition can, e.g., be achieved by use of a pre-chamber, a spark plug and/or a pilot fuel. Engine speed is preferably below 800 RPM, especially for 4-stroke engines, and more preferably below 200 RPM, especially for 2-stroke engines, which indicates the designation of low-speed engines.

Fuel can be diesel or marine diesel oils or heavy fuel oils or emulsions or slurries or methanol or ethanol as well as other fluids, like liquefied natural gas (LNG), liquefied petrol gas (LPG), natural gas (NG), petrol gas (PG) and so on.

Further possible fuels which might be added on request are: LBG (Liquefied Biogas), biological fuels (e. g. oil made from algae or seaweed), ammonia, hydrogen, synthetic fuels from CO2 (e.g. made by Power-To-Gas or Power-To-Liquid).

Large ships, in particular vessels for transport of goods, usually are powered by internal combustion engines, in particular diesel and/or gas engines, mostly two-stroke, cross-head engines.

The pistons of reciprocating piston internal combustion engines, in particular reciprocating piston internal combustion engines of the dual-fuel or Otto-cycle type, are provided with piston rings which are seated in grooves in the piston and serve to seal the combustion chamber from the outside.

The piston rings used in reciprocating piston internal combustion engines and especially in reciprocating piston internal combustion engines of the two-stroke large dual-fuel or Otto-cycle design usually have an essentially rectangular cross-section. Due to a special shaping of the running surface of the piston rings, slight deviations from the rectangular shape can occur in the area of the running surface. The outward facing side of the piston ring can be cambered.

The height of conventional piston rings measured in the axial direction is normally smaller than the cross-sectional dimension in the radial direction, i.e. the difference between the outer and inner diameter. Typical values for the axial width as a function of the nominal diameter of the piston rings are listed in DIN 34110, for example.

Such piston rings are e.g. known from DE 197 20 779 C1.

Within this application the term axial refers to a direction perpendicular to the ring plane of the piston ring which usually corresponds to the axial direction of the piston and the cylinder, when the piston ring is mounted to the piston. Analogously, the term radial relates to the radial direction of the piston ring geometry and the term circumferential to the circumferential direction of the piston ring geometry.

The piston ring may comprise a piston ring lock, for example as shown in CH 229278, EP 1655522 B1, or EP 3889471 B1 wherein the piston ring lock is formed by two locking ends of the piston ring. A tongue may be formed at a male locking end of the piston ring and a recess at a female locking end. The recess may be open towards the radially outer side and towards one axial side and may extend over a part of the radial width and a part of the axial width of the piston ring.

The tongue and the recess are designed and arranged in such a way that they can slide on each other in the circumferential direction of the piston ring. Due to the tongue, the parting lines in the area of the tongue are interrupted in both axial and radial directions. The design is therefore also called a "gas-tight" lock.

The dimensions of the tongue and the recess typically are manufactured such that the tongue and the recess have a clearance of between 0.05 and 0.1 mm, which may be in the same order of magnitude or even greater as the cambering.

The pivot line of a cambered piston ring may be defined by the maximally extending line of the cambering. Before the ring wears out, the pivot line corresponds to a contact line of the piston ring with the cylinder. However, during use, a wear track may form in an axial region around the pivot line, which touches the liner of the cylinder.

For known piston ring locks, wherein the recess is opened towards the outside, the pivot line may be arranged parallel and axially distanced to the circumferential parting line and on the tongue.

When there arises a pressure from the inner side of the piston ring, the inner part of the piston ring lock, for example a locking end with a recess, presses against the outer part of the piston ring lock, for example a locking end with a tongue.

A pressure from the inner side typically arises, when there is a pressure in the combustion chamber and the piston ring is axially pressed against the piston groove.

Due to a pressure from the inner side of the piston ring the locking ends may slightly open and allow hot gases to escape to the outside, which may result in damage of the piston ring in the area of the piston ring lock.

In this case sharp edges may arise which may damage the cylinder wall.

The roughness of the piston ring outside may be reduced by polishing or lapping. For example, EP 3802905 B1 discloses to coat a piston ring and then to lap it to remove the peaks without penetrating the coating, so that valleys and plateaus remain in the coated surface. EP 2969384 A1 teaches the step of lapping the piston ring to a final longitudinal thickness.

### Disclosure of the invention

The invention is based on the task of providing a piston ring, a piston with such a piston ring, a reciprocating internal combustion engine with such a piston and a method for manufacturing a piston ring of the kind mentioned above which at least in part avoids the disadvantages of the prior art solutions and/or which provides for a sufficient sealing and a longer-life durability of the piston ring as well as the cylinder liner.

This object is achieved by a piston ring for a piston of a reciprocating internal combustion engine according to claim 1.

According to a first aspect of the invention, the piston ring for a piston of a reciprocating internal combustion engine comprises a ring section and a lock section.

The ring section has an axial width in an axial direction, a maximum thickness in a radial direction, an inner and an outer diameter. The ring section may have a mainly rectangular cross-section, wherein the axial width is smaller than the maximum thickness. The lock section may have the same radial and axial extensions.

Typically, the axial width may be in a range of 5 mm-50 mm, the outer diameter in a range of 200 mm-2000 mm and a maximal thickness in radial direction in a range of 6 mm and 60 mm.

The lock section comprises a male locking end and a female locking end. The male locking end comprises a tongue and the female locking end comprises a recess, such that the tongue is insertable into the recess. The recess is open towards a radial outer side and a bottom side of the piston ring.

Preferably, the cross-section of the recess corresponds to the cross-section of the tongue, such that when the piston ring is mounted, there is only small gap between the recess and the tongue in axial and radial direction, preferably smaller than 0.1 mm.

Within this application, a top side corresponds to a first axial side and a top surface to the surface on the first axial side of the piston ring. Analogously, a bottom side corresponds to a second axial side and a bottom surface to the surface on the second axial side of the piston ring. When the piston ring is mounted the top surface typically is closer towards the cylinder head, whereas the bottom surface is closer towards the crankcase.

The lock section comprises a circumferential parting line in a first axial parting line distance from the top surface of the piston ring and in a second axial parting line distance from the bottom surface of the piston ring, which preferably remain constant along the circumferential extension of the circumferential parting line, such that the circumferential parting line is parallel to the top surface and the bottom surface of the piston ring.

Preferably, the first and/or the second axial parting line distances are at least 10% of axial extension of piston ring.

The circumferential parting line is an ideal line between the recess and the tongue. In use, there may be a small axial gap between the recess and the tongue. However, the width of this gap typically is two orders of magnitude smaller than the axial extension of the piston ring. The position of the parting line can thus be specified with the accuracy of the gap width.

The piston ring comprises a cambered profile on the radially outward facing surface of the piston ring.

The cambered profile comprises one circumferential pivot line having a first axial pivot line distance from the top surface of the piston ring and a second axial pivot line distance from the bottom surface of the piston ring.

The first axial pivot line distance between the pivot line and top surface and the second axial pivot line distance between the pivot line and the bottom surface of the piston ring preferably are constant around the circumference, such that the pivot line is parallel to the top surface and the bottom surface of the piston ring.

Preferably, the first axial pivot line distance between the pivot line and the top surface is equal to or larger than the second axial pivot line distance between the pivot line and the bottom surface of the piston ring. When mounted, the pivot line may be arranged in the lower half of the piston ring. This is to reduce the resulting outwardly directed force from the piston ring onto the cylinder liner. This is due to an increased counterpressure on the outside of the piston ring (due to an increased surface area above the pivot line) which acts above the pivot line.

The axial distance between the circumferential parting line and the pivot line is smaller than 20%, preferably smaller than 10% of the axial width of the piston ring.

Preferably, the first axial pivot line distance between the pivot line and the top surface is smaller than the first axial parting line distance between the circumferential parting line and the top surface. Hence, when mounted, the pivot line may be above the circumferential parting line. Alternatively, also the opposite is possible, i.e. the first axial pivot line distance between the pivot line and the top surface can also be larger than the first axial parting line distance between the circumferential parting line and the top surface. Then, when mounted, the pivot line may be below the circumferential parting line.

Alternatively or in addition to the distinct circumferential pivot line, the cambered profile can comprise a most protruding, axially extending, flat section. The flat section radially protrudes the furthest.

The flat section includes the circumferential parting line.

Within this application "flat section" means that in a cross-section the outer profile of the section has a curvature with a radius in radial direction, which is at least five times larger than the radius in radial direction of the rest of the profile, preferably ten times larger, in particular the radius of the curvature of the flat section in radial direction approaches to infinity.

The flat section extends over the circumferential parting line and over a pivot line when there is one. A pivot line may be arranged in the flat section centrally or not centrally with respect to the axial direction.

Preferably, there is a distance between the flat section and the top surface of the piston ring and/or between the flat section and the bottom surface of the piston ring of at least 5% of the axial width of the piston ring.

Hence, preferably, the flat section is not arranged adjacent to the top surface and/or the bottom surface of the piston ring such that there remains a distance between the top surface and/or the bottom surface and the edges of the flat section.

The flat section may be arranged closer to the bottom surface than to the top surface. The distance between the flat section and the top surface is then larger than the distance between the flat section and the bottom surface.

An arrangement of the circumferential parting line close to the radially most protruding part of the piston ring, which is the pivot line or the flat section, provides for a pressure during use that is sufficient for pressing oil from the cylinder liner to the parting line. A potential space between a top surface of the tongue tending towards the recess in axial direction and a bottom surface of the recess tending towards the tongue in axial direction may be filled with oil. Hence, the circumferential parting line remains gas-tight.

The arrangement of the circumferential parting line with respect to the contour of the cambered profile of the piston ring provides for an appearance of a wear track in an axial section that includes the circumferential parting line. However, the wear track remains the most protruding region and provides a pressure for guiding oil to the circumferential parting line. Thus, even after use, i.e. after the engine has been used for a while which leads to wear on the piston ring, i.e. taking into account this certain amount of wear on the piston ring, the potential space between the top surface of the tongue and the bottom surface of the recess may be filled with oil and the circumferential parting line remains gas-tight.

Preferably, the circumferential pivot line and/or at least a part of the flat section may be arranged in the lower axial half of the piston ring when mounted. This is advantageous since during use, generally a greater pressure arises from the top surface, which typically faces towards the combustion chamber. This leads to the above explained lowered outwardly directed pressure of the piston ring against the cylinder liner.

It should be noted, however, that also the opposite is possible, i.e. an arrangement of the circumferential pivot line and/or at least a part of the flat section in the upper axial half of the piston ring.

The pivot line may coincide with the parting line. However, when the edge portions are on the mostly protruding pivot line, there is the risk, particularly, when the piston ring is brittle, for example due to a brittle coating material, edge portions of the locking section may be forced outwardly during use and may be damaged.

Alternatively, the axial distance between the circumferential parting line and the pivot line is at least 2% of the axial width of the piston ring. This enhances durability.

The axial length of the flat section is at least 5% of the axial width of the piston ring.

Thus, after some time of use, the parting line is in the wear track but not the most protruding. The edge portions are protected, because they are not touching the cylinder liner.

The cambered profile may have a curvature, which has a radius that is larger than the outer diameter of the piston ring. In case the piston ring has a flat section, the curvature has an even larger radius in this section.

The cambered profile may have sections which are circularly shaped, for example in both sides of a flat section.

The cambered profile may have a height of 0.01 mm to 1 mm. in this context "height" means the difference between the largest and the lowest radial width of the radially outward facing surface of the piston ring. The height of the profile corresponds to the degree of protrusion of a pivot line or of a most protruding flat section.

Although the height may be in the same order of magnitude as the gap between the male and the female part of the locking section, the cambering is sufficient for providing an axially limited contact face between piston ring and cylinder liner, which may be seen on a wear track. Typically, the wear track axially extends only over a part of the axial extension of the outer piston ring surface.

The outer surface of the piston ring may be lapped in the region of the pivot line and/or in the region of the flat section.

In particular, the outer surface may be lapped around the pivot line and/or around the flat section.

The outer surface of the piston ring may be lapped in an axially and circumferentially extending area which includes the circumferential parting line.

The lapped region may comprise an axial extension which is larger than the axial distance between the circumferential parting line and the pivot line, preferably larger than twice the axial distance between the circumferential parting line and the pivot line.

In the lapped region, the surface may have a small roughness.

In a preferred embodiment, the arithmetic average roughness Ra in the lapped section may be smaller than 1 µm.

The process of lapping may lead to the creation of the flat section. The lapped section and the flat section may coincide.

At least a part of the piston ring may be coated.

The piston ring may have a tread coating, that is a coating of the radially outer surface facing the cylinder liner.

The radially outer surface of the piston ring may comprise an upper and/or a lower flank. The piston ring may be coated on only the flanks.

All surfaces except the tread or any combination of partial surfaces may be coated, in particular with a corrosion protection coating.

At least a part of the piston ring may be chemically or physically coated. A metallic coating, for example chromium, may be electrolytically deposited on at least a part of the piston ring. Coating may provide for a hard and/or durable surface.

Most physically applied running surface coatings (usually by means of flame spraying or comparable processes) on piston rings for large engines contain chromium, nickel, molybdenum and iron carbides in various compositions or mixing ratios. These coatings are corrosion-inhibiting by nature, but have the primary task of creating a hard and/or durable and at the same time lowfriction (smooth) surface relative to the cast iron of the liner. For corrosion protection, the other surfaces of the piston ring (upper and lower flank, inside of the ring) are sometimes phosphated, rarely also chrome-plated, especially the lower flank, which extends the service life of the piston ring because the chrome-plating causes the flank surface to wear less quickly.

The radial extension may be equal to the axial extension of the tongue of the male locking end. Alternatively, the axial extension of the tongue may be larger than the radial extension.

However, the tongue is stiffer with respect to radially bending if the radial extension of the tongue is larger than the axial extension of the tongue of the male locking end. For a stiffer tongue, there is a lower risk of outwardly bending under pressure and scraping along the cylinder liner during use.

According to a second aspect of the invention, the object of the invention is also achieved by a piston of a reciprocating internal combustion engine comprising at least one piston ring as described above with regard to the first aspect of the invention.

The piston may comprise a plurality of piston rings according to the invention as described above. Alternatively or in addition, the piston may comprise at least one gas-tight piston ring according to the invention as described above with regard to the first aspect of the invention and one or more other piston rings e.g. according to prior art solutions.

According to a third aspect, the object of the invention is also achieved by a reciprocating internal combustion engine comprising such a piston with a piston ring as described above with regard to the first and second aspects of the invention, respectively.

The reciprocating internal combustion engine is in particular a large vessel engine, e.g. a low-speed two-stroke marine propulsion engine, with at least one cylinder having an inner diameter of at least 200 mm, preferably a two-stroke engine and/or a two-stroke cross-head engine.

According to a fourth aspect, the object of the invention is also achieved by a method for manufacturing a piston ring, preferably a piston ring as described above with regard to the first aspect of the invention.

The method comprises the step of providing a blank, preferably formed as a closed ring with essentially rectangular cross section.

The blank may be manufactured by casting or forging, for example from grey iron or steel.

Subsequently, a ring with the main dimensions of the final product may be produced by turning and/or milling and/or grinding the blank.

Subsequently, a lock section is produced in the blank. Thereby a ring section, a male locking end and a female locking end are formed. The male locking end and the female locking end are adjusted in circumferential length for the ring to have the correct overall circumferential length.

The lock section may be produced by milling and/or cutting the blank. Chamfers may be produced in suitable locations of the male locking end and of the female locking end by milling or grinding to improve the tread coating and to avoid friction with the cylinder. Sharp edges may be removed by grinding and/or brushing to avoid friction with the cylinder.

The male locking end comprises a tongue and the female locking end comprises a recess, such that the tongue is insertable into the recess. The recess is open towards a radial outer side and a bottom side of the piston ring.

The lock section comprises a circumferential parting line in a first axial parting line distance from a top side of the piston ring and a second axial parting line distance from the bottom side of the piston ring.

The piston ring comprises a cambered profile on the radially outward facing surface of the piston ring.

The cambered profile comprises one circumferential pivot line having a first axial pivot line distance from the top side of the piston ring and a second axial pivot line distance from the bottom side of the piston ring. The axial distance between the circumferential parting line and the pivot line is smaller than 20%, preferably smaller than 10% of the axial width of the piston ring.

Alternatively or in addition to the distinct circumferential pivot line, the cambered profile comprises a most protruding, axially extending, flat section, wherein the flat section includes the circumferential parting line.

During manufacturing of the piston ring, first a cambered profile with a pivot line may be formed, for example by turning, milling and/or grinding. Subsequently, a flat section may be formed, for example by turning, milling, grinding, lapping and/or polishing.

Alternatively, a cambered profile comprising a flat section may be formed in one step from the blank, in particular by turning, milling and/or grinding. Subsequently, the tread may be smoothed by lapping and/or polishing.

Particularly, the outer surface of the piston ring may be lapped in a region around the pivot line in an axially and circumferentially extending area with an axial extension larger than the axial distance between the circumferential parting line and the pivot line, such that the axially and circumferentially extending area includes the circumferential parting line.

The lapping results in a smooth surface and may provide for a flat section.

At least a part of the blank may be coated with a coating material, in particular the outward facing surface of the blank.

Preferably, the step of coating takes place after forming the cambered profile but precedes the step of smoothing.

### Brief Description of the Drawings

Further advantageous aspects of the invention are explained in the following by means of exemplary embodiments and the figures. Functionally equal elements are provided with the same reference signs. In the drawings, in a schematic manner:
- Figure 1:: shows a first example of a piston ring in a perspective view;
- Figure 2:: shows a lock section of a second example of a piston ring in a perspective view;
- Figure 3:: shows a profile of a third example of a piston ring in a cross-section;
- Figure 4:: shows a profile of a fourth example of a piston ring in a cross-section.

### Modes for Carrying Out the Invention

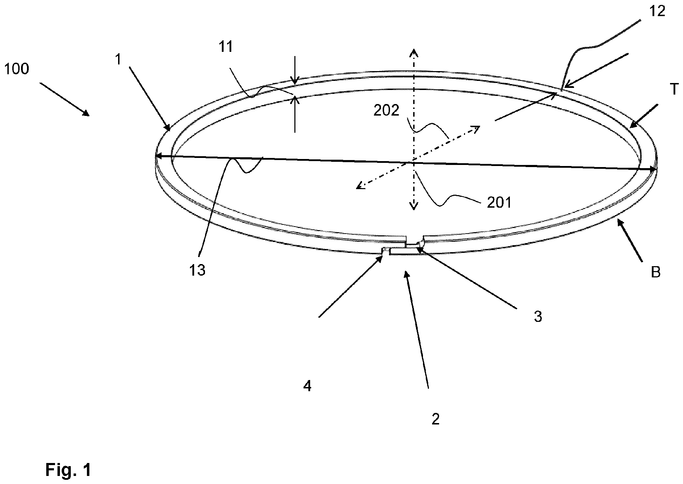

Figure 1 shows a first example of a piston ring 100 in a perspective view.

The piston ring 100 comprises a ring section 1 and a lock section 2.

The ring section 1 has an axial width 11 in axial direction 201, a radial width 12 in radial direction 202 and an outer diameter 13.

The lock section 2 has basically the same extensions and comprises a male locking end 3 and a female locking end 4.

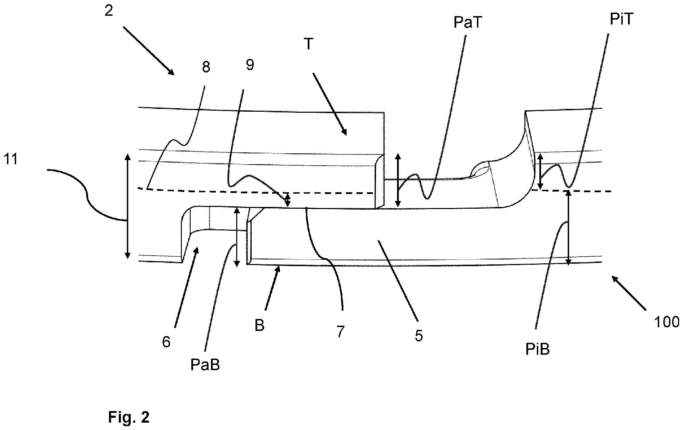

Figure 2 shows a lock section 2 comprising a male locking end 3 and a female locking end 4 of a second example of a piston ring in a perspective view.

The male locking end 3 comprises a tongue 5 and the female locking end 4 comprises a recess 6. The tongue and the recess are dimensioned such that the tongue 5 is insertable into the recess 6, while the bottom surfaces B of the male locking end 3 and the female locking end 5 are mainly in the same axial plane. The recess 6 is open towards a radial outer side and towards the bottom surface B of the piston ring 100.

The lock section 2 comprises a circumferential parting line 7 in a first axial parting line distance PaT from a top surface T of the piston ring 100 and in a second axial parting line distance PaB from the bottom surface B of the piston ring 100.

The piston ring 100 comprises one circumferential pivot line 8, which has a first axial pivot line distance PiT from the top surface T of the piston ring 100 and a second axial pivot line distance PiB from the bottom surface B of the piston ring 100.

The axial distance 9 between the circumferential parting line 7 and the pivot line 8 is smaller than 20% of the axial width 11 of the piston ring 100.

In this example, the pivot line 8 is above the parting line 7. During use, a wear track (not shown in the figure) appears around the pivot line 8, which also includes the parting line 7.

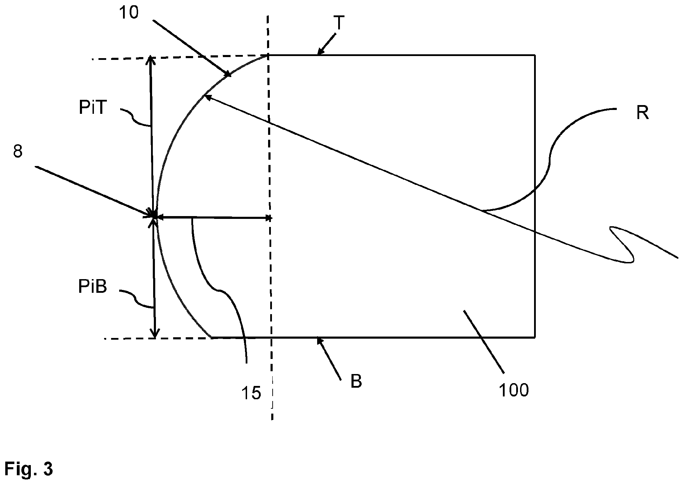

Figure 3 shows a cross-sectional profile of a ring section of a third example of a piston ring 100.

The piston ring 100 has a cambered profile 10 with a pivot line 8, which is defined by the most protruding point in the profile 10. The pivot line 8 has a first axial pivot line distance PiT from the top surface T of the piston ring 100 and a second axial pivot line distance PiB from the bottom surface B of the piston ring 100.

The cambered profile 10 has a curvature with a radius R that is larger than the outer diameter 13 (see figure 1) of the piston ring 100.

The cambered profile 10 has a height 15 of 0.01 mm to 1 mm (drawing not to scale).

In this example the pivot line 8 is closer to the bottom surface B of the piston ring 100 than to the top surface T.

Alternatively, the pivot line 8 may be closer to the top surface T than to the bottom surface as in Fig. 2.

In any case, the circumferential parting line 7 not shown in the figure, is close to the pivot line 8, i.e. the axial distance between the circumferential parting line 7 and the pivot line 8 is smaller than 20% of the axial width 11 of the piston ring 100.

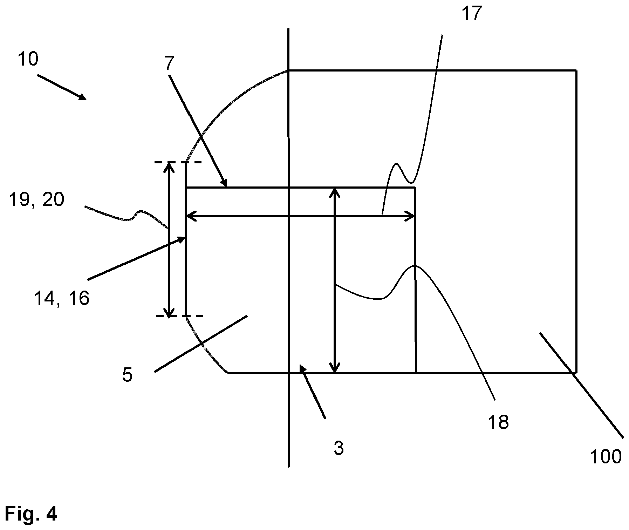

Figure 4 shows a cross-sectional profile of a lock section of a fourth example of a piston ring 100. The piston ring 100 has a cambered profile 10 with a most protruding, axially extending, flat section 14. The flat section 14 has an axial length 19, which corresponds to the axial extension 20 of an axially and circumferentially extending lapped area 16.

In this example, the radial extension 17 of the tongue 5 of the male locking end 3 is larger than the axial extension 18 of the tongue 5 of the male locking end 3.

### Note:

Any embodiments described with respect to the devices shall similarly pertain to the method. Synergetic effects may arise from different combinations of the embodiments although they might not be described in detail.

While there are shown and described presently preferred embodiments of the invention, it is to be distinctly understood that the invention is not limited thereto but may be otherwise variously embodied and practiced within the scope of the following claims.

## Claims

1. A piston ring (100) for a piston of a reciprocating internal combustion engine, the piston ring comprising
- a ring section (1) and
- a lock section (2), the lock section (2) comprising a male locking end (3) and a female locking end (4),
wherein the male locking end (3) comprises a tongue (5) and the female locking end (4) comprises a recess (6), such that the tongue (5) is insertable into the recess (6), and the recess is open towards a radial outer side and a bottom side of the piston ring (100),
wherein the lock section (2) comprises a circumferential parting line (7) in a first axial parting line distance (PaT) from a top surface (T) of the piston ring (100) and a second axial parting line distance (PaB) from the bottom surface (B) of the piston ring (100), and wherein
the piston ring (100) comprises a cambered profile (10), wherein
- the cambered profile (10) comprises one circumferential pivot line (8) having a first axial pivot line distance (PiT) from the top surface (T) of the piston ring (100) and a second axial pivot line distance (PiB) from the bottom surface (B) of the piston ring (100), wherein the axial distance (9) between the circumferential parting line and the pivot line is smaller than 20%, preferably smaller than 10%, of the axial width of the piston ring, and/or
- wherein the cambered profile (10) comprises a most protruding, axially extending, flat section (14), the flat section (14) including the circumferential parting line (7).

2. The piston ring (100) according to claim 1, wherein the first axial pivot line distance (PiT) between the circumferential pivot line (8) and the top surface (T) is equal to or larger than the second axial pivot line distance (PiB) between the circumferential pivot line (8) and the bottom surface (B).

3. The piston ring (100) according to claim 1 or 2, wherein the axial distance between the circumferential parting line (7) and the pivot line (8) is at least 2% of the axial width (11) of the piston ring (100).

4. The piston ring (100) according to one of the preceding claims wherein the axial length (19) of the flat section (14) is at least 5% of the axial width (11) of the piston ring (100).

5. The piston ring (100) according to one of the preceding claims, wherein the cambered profile has a curvature having a radius (R) that is larger than the outer diameter (13) of the piston ring (100).

6. The piston ring (100) according to one of the preceding claims wherein the cambered profile has a height (15) of between 0.01 mm to 1 mm.

7. The piston ring (100) according to one of the preceding claims, wherein the outer surface of the piston ring (100) is lapped in the region of the pivot line (8) and/or in the region of the flat section (14),
in particular around the pivot line (8),
in an axially and circumferentially extending area (16) which includes the circumferential parting line (7), preferably with an axial extension (20) larger than the axial distance (9) between the circumferential parting line (7) and the pivot line (8), preferably larger than twice the axial distance (9) between the circumferential parting line (7) and the pivot line (8).

8. The piston ring (100) according to one of the preceding claims, wherein at least a part of the piston ring (100) is coated.

9. The piston ring (100) according to one of the preceding claims, wherein the radial extension (17) of the tongue (5) of the male locking end (3) is larger than the axial extension (18) of the tongue (5) of the male locking end (3).

10. A piston of a reciprocating internal combustion engine comprising a piston ring (100) according to at least one of the preceding claims.

11. A reciprocating internal combustion engine, in particular a large vessel engine with at least one cylinder having an inner diameter of at least 200mm, preferably a two-stroke engine and/or a two-stroke cross-head engine, comprising a piston according to claim 10.

12. A method for manufacturing a piston ring (100), preferably a piston ring (100) according to at least one of the claims 1-9, comprising the following steps:
- Providing a blank, preferably formed as a closed ring with essentially rectangular cross-section;
- Producing a lock section (2) in the blank, thereby forming a ring section (1), a male locking end (3) and a female locking end (4),
wherein the male locking end (3) comprises a tongue (5) and the female locking end (4) comprises a recess (6), such that the tongue (5) is insertable into the recess (6), and the recess (6) is open towards a radial outer side and a bottom side (B) of the piston ring (100), wherein the lock section (2) comprises a circumferential parting line (7) in a first axial parting line distance (PaT) from a top side (T) of the piston ring (100) and a second axial parting line distance (PaB) from the bottom side (B) of the piston ring (100), and wherein the piston ring (100) comprises a cambered profile (10) and wherein the cambered profile (10) comprises one circumferential pivot line (8) having a first axial pivot line distance (PiT) from the top side (T) of the piston ring (100) and a second axial pivot line distance (PiB) from the bottom side (B) of the piston ring (100), wherein the axial distance (9) between the circumferential parting line (7) and the pivot line (8) is smaller than 20%, preferably smaller than 10%, of the axial width (11) of the piston ring (110),
and/or
- wherein the cambered profile (10) comprises a most protruding, axially extending, flat section (14), the flat section (14) including the circumferential parting line (7) .

13. The method according to claim 12 comprising the step of lapping the outer surface of the piston ring (100) in a region around the pivot line (8) in an axially and circumferentially extending area (16) with an axial extension (20) larger than the axial distance (9) between the circumferential parting line (7) and the pivot line (8), such that the axially and circumferentially extending area (16) includes the circumferential parting line (7).

14. The method according to one of claims 12 to 13 comprising the step of coating at least a part of the blank with a coating material, in particular the outward facing surface of the blank.
